(19) Europäisches Patentamt
European Patent Office
Office européen des brevets

(11) Veröffentlichungsnummer: **0 093 333**
**B1**

# (12) EUROPÄISCHE PATENTSCHRIFT

(45) Veröffentlichungstag der Patentschrift: 03.09.86

(51) Int. Cl.⁴: **C 08 L 67/02**

(21) Anmeldenummer: 83103895.5

(22) Anmeldetag: 21.04.83

## (54) Mischungen aus mesomorphen Polykondensaten und teilkristallinen Thermoplasten, Verfahren zu ihrer Herstellung und ihre Verwendung zur Herstellung von Formkörpern.

(30) Priorität: 03.06.82 DE 3216413

(43) Veröffentlichungstag der Anmeldung: 09.11.83 Patentblatt 83/45

(45) Bekanntmachung des Hinweises auf die Patenterteilung: 03.09.86 Patentblatt 86/36

(84) Benannte Vertragsstaaten: AT DE FR GB IT NL

(56) Entgegenhaltungen:
EP-A-0 030 417
EP-A-0 044 184
GB-A-2 078 240

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Tacke, Peter, Dr., Brandenburger-Strasse 12, D-4150 Krefeld 12 (DE)**
Erfinder: **Reinking, Klaus, Dr., Robert- Stolz-Strasse 16 B, D-5632 Wermelskirchen (DE)**
Erfinder: **Freitag, Dieter, Dr., Hasenheide 10, D-4150 Krefeld (DE)**
Erfinder: **Röhr, Harry, Dr., Zur Ville 21, D-5020 Frechen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 093 333 B1

LIBER, STOCKHOLM 1986

**Beschreibung**

Die Erfindung betrifft Mischungen aus mesomorphen Polykondensaten und teilkristallinen Thermoplasten, die mit den mesomorphen Polykondensaten ein zweiphasiges System bilden, ein Verfahren zur Herstellung dieser Mischungen in der Schmelze und ihre Verwendung zur Herstellung von Formkörpern.

Mesomorphe Polykondensate (d.h. Polykondensate, die flüssig-kristalline Schmelzen bilden) haben wegen ihrer außergewöhnlichen Eigenschaften großes Interesse gefunden. Als Formmassen sind sie allerdings wegen geringer Härte und starker Anisotropie (in Abhängigkeit von der Fließrichtung) der mechanischen Eigenschaften, z.B. Zähigkeit, Steifigkeit, daraus hergestellter Spritzgußteile im allgemeinen wenig geeignet.

Es wurde nun gefunden, daß der Zusatz teilkristalliner Thermoplaste die geschilderten Eigenschaften überraschend stark verbessert.

Gegenstand der Erfindung sind also Mischungen aus

a. 60-99,5, vorzugsweise 70-95, Gew.-% mindestens eines mesomorphen Polykondensats A und

b. 0,5-40, vorzugsweise 5-30, Gew.-% mindestens eines teilkristallinen Thermoplasten B mit einer Schmelzenthalpie von $\geq$ 10 J/g mit der Maßgabe, daß A mit B (im Festkörper) ein zweiphasiges System bildet,

wobei der teilkristalline Thermoplast B aus der Reihe voll-aromatischer Polyester, Polyamide, Polyoxymethylen, Polyethylen und Polypropylen ausgewählt ist.

Weiterer Gegenstand der Erfindung ist ein Verfahren zur Herstellung dieser Mischungen durch Homogenisieren der Komponenten in der Schmelze.

Weiterer Gegenstand der Erfindung ist die Verwendung der Mischungen zur Herstellung von Formkörpern, insbesondere durch Spritzguß oder Extrusion.

Mesomorphe Polykondensate sind hinreichend bekannt, vgl. z.B.

F. E. McFarlane et al., Liquid Crystal Polymers II, Contemporary Topics in Polymer Science, Vol. 2, Plenum Publishing Corporation, 1977;

S. L. Kwolek et al., Macromolecules 10, 1930 (1977);

W. J. Jackson und H. F. Kuhfuss, J. Polymer Science, Polymer Chem. ed. 14 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

EP 22 344, 23 499, 15 859, 17 310, 15 088, 8 855,

WO 79/01034, 79/797 und

DE-OS 2 751 653.

Der flüssig-kristalline Zustand der Polykondensatschmelzen läßt sich mit Hilfe eines Polarisationsmikroskops untersuchen: Für die Untersuchungen war das Okular mit einem Aufsatz ausgerüstet, der eine Photodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0.01 Skalenteilen.

Die Schichtdicke der untersuchten Polykondensatschmelzen betrug 100 $\mu$m.

Die Untersuchung der flüssig-kristallinen Schmelzen erfolgte nach dem Aufschmelzen der Proben bei Temperaturen, bei denen die Schmelzen so dünnflüssig waren, daß sie durch geringfugiges Verschieben des Deckgläschens zwischen diesem und dem Objektträger in heftige Turbulenz versetzt wurden.

Um sicherzustellen, daß die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung noch weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als mesomorph eingestuft. Sie zeigten in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüßsig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Die Zweiphasigkeit der erfindungsgemäßen Mischungen läßt sich in den meisten Fällen im normalen Lichtmikroskop (Vergrößerung bis 1:1500) feststellen. Weisen sowohl der teilkristalline Thermoplast als auch das mesomorphe Polykondensat den gleichen Brechungsindex auf, dann ist diese Methode jedoch ungeeignet. Man benutzt in solchen Fällen ein Elektronenmikroskop; in schwierigen Fällen werden die Proben vor der Untersuchung angeätzt, beispielsweise mit Osmiumtetroxid. Die Zweiphasigkeit bezieht sich immer auf den festen Aggregatzustand bei 25°C.

Die mesomorphen Polykondensate A können z.B. aus den folgenden Verbindungen hergestellt werden:

o-, m- oder p-Hydroxy-benzoesäure, > drochinon, durch Halogen, $C_1$- bis $C_3$-Alkyl oder Phenyl substituierte Hydrochinone, > droxy-naphthalin-carbonsäuren,

Isophthalsäure,
Terephthalsäure,
Naphthalindicarbonsäure,
4,4'-Dihydroxydiphenyl,
4,4'-Dihydroxy-stilben,
1,2-Bis(p-carboxy-phenoxy)ethan,
4,4'-Dihydroxydiphenylether,
4,4'-Diphenylether-dicarbonsäure,
Resorcin,
4,4'-Benzophenondicarbonsäure,
2,5-Furandicarbonsäure,
4,4'-Bis(p-hydroxy-phenoxy)diphenylether,
1,2-Bis(p-hydroxyphenyl)ethan,
Dihydroxyanthrachinone,
4,4'-Hydroxy-diphenylether-carbonsäure,
Azobenzoldicarbonsäure,
Bisphenol-A,
Ethylenglykol, Hexandiol-1,6, Adipin-, Sebacinsäure,
Kohlensäure.

Bevorzugte mesomorphe Polykondensate A sind Polyester.

Nicht sämtliche Kombinationen der oben aufgezählten Ausgangsmaterialien ergeben mesomorphe Polykondensate. Der Fachmann wird seine Auswahl jeweils anhand der oben zitierten Literatur treffen oder aber aufgrund seiner Erfahrung empirisch vorgehen. Da die mesomorphen Polykondensate A an sich bekannt sind, kann eine längere Ausführung an dieser Stelle entfallen.

Als Verzweigungsmittel können zur Herstellung der mesomorphen Polykondensate A mehr als bifunktionelle Verbindungen, vorzugsweise Carbonsäuren und/oder Phenole eingesetzt werden. Sie werden in der Regel in Mengen bis zu 1 Mol-%, bezogen auf die Summe sämtlicher Ausgangsverbindungen, verwendet.

Als Kettenabbrecher können in die mesomorphen Polykondensate A monofunktionelle Verbindungen, vorzugsweise Phenole und/oder carbonsäuren einkondensiert werden. Bevorzugte Kettenabbrecher sind z. B.
Phenol,
$C_7$-$C_{20}$-Alkylphenole,
Benzoesäure und Alkylbenzoesäuren mit bis zu 20 C-Atomen im Alkylrest.

Weiterhin kommen Kohlensäurehalbester in Betracht.

Die Baugruppen können sowohl statistisch als auch in Form von Blöcken verteilt sein.

Die mesomorphen Polykondensate 9 besitzen vorzugsweise relative Viskositäten von 1,1 bis 1,5, insbesondere von 1,2 bis 1,4, gemessen an einer Lösung von 0,5 g Polykondensat A in 100 ml Phenol/o-Dichlorbenzol (1:1 Gewichtsteile) bei 25° C.

Die teilkristallinen Thermoplasten B im Sinne der vorliegenden Erfindung sind gekennzeichnet durch ihre Fähigkeit, beim Abkühlen der Schmelze mit einer Kühlrate ≦ 1° C/min. teilweise zu kristallisieren. Die Schmelzenthalpien dieser teilkristallinen Thermplasten können beispielsweise nach dem bekannten Verfahren der Differentialthermoanalyse bestimmt werden, das z.B. bei Vieweg/Braun, Kunststoff-Handbuch, Band I, S. 591 f., Carl Hanser Verlag, München 1975, beschrieben ist.

Bevorzugte teilkristalline Thermoplasten B sind vollaromatische Polyester aus Diphenolen und Iso- und oder Terephthalsäure. Sie besitzen in der Regel relative Viskositäten von 1,18 bis 2,0, vorzugsweise von 1,2 bis 1,5 (gemessen an einer Lösung von 0,5 g Polyester in 100 ml Dichlormethan-Lösung bei 25° C).

Bevorzugte Diphenole für die Herstellung der aromatischen Polyester B sind Verbindungen der Formel HO - Z - OH (I)

worin Z einen zweiwertigen ein- oder mehrkernigen aromatischen Rest mit 6 - 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

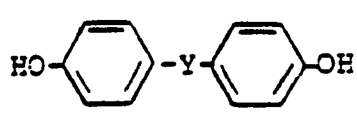
(II)

in der
Y
eine Einfachbindung, einen Alkylen- oder Alkylidenrest mit 1 - 7 C-Atomen, einen Cycloalkylen oder Cycloalkylidenrest mit 5 - 12 C-Atomen, -O-, oder

$-\underset{\overset{\|}{O}}{C}-$ bedeutet, sowie deren kernalkylierte und kernhalogenierte Derivate, z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone, und
α, α'-Bis-(hydroxyphenyl)-diisopropylbenzole

sowie deren kernalkylierte und kernhalogenierte Verbindungen, insbesondere z. B. Bisphenol A = 2,2-Bis-(4-hydroxyphenyl)-propan, Tetramethylbisphenol A, 1,1-Bis-(4-hy-droxyphenyl)-isobutan, 1,1-Bis-(4-hydroxyphenyl)-cyclohexan, 4,4'-Dihydroxydiphenyl, sowie deren di- und tetrahalogenierte Derivate. Besonders bevorzugt ist Bisphenol A. Es können auch beliebige Mischungen der vorgenannten Diphenole verwendet werden.

Als Kettenabbrecher für die aromatischen Polyester B werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet. Außerdem kommen Chloride von aliphatischen Monocarbonsäuren mit bis zu 25 C-Atomen in Betracht.

Als Verzweigungsmittel für die aromatischen Polyester B lassen sich vorzugsweise 3- oder höherfunktionelle Carbonsäurechloride oder 3- und höherwertige Phenole in Mengen von 0,01 bis 1 Mol-%, bezogen auf eingesetzte Dicarbonsäurechloride bzw. auf eingesetzte Diphenole, verwenden.

Außerdem können die aromatischen Polyester B bis zu 10 Mol-% Säureanhydridgruppierungen (bezogen auf die Carbonestergruppierungen) enthalten.

Verfahren zur Herstellung aromatischer Polyester sind bekannt:

Sie können aus Diphenolen, Iso- und/oder Terephthalsäure, Kettenabbrechern und gegebenenfalls Verzweigungsmitteln nach dem Umesterungsverfahren oder aus Diphenolen, Iso- und/oder Terephthalsäuredichloriden, Kettenabbrechern und gegebenenfalls Verzweigungsmitteln in der Schmelze, in Lösung oder nach dem Phasengrenzflächenverfahren hergestellt werden; vergleiche V. V. Korshak und S. V. Vinogradova, "Polyesters", Pergamon Press, 1965.

Bevorzugte Polyamide B umfassen langkettige synthetische Polymere, die regelmäßig wiederkehrende Amidgruppen als integralen Bestandteil der Hauptpolymerkette besitzen und somit Amidestermischpolymere einschließen. Sie sind im Kunststoff-Handbuch, Band VI, Carl Hanser Verlag, München beschrieben. Polyamide können durch Polykondensation bzw. -addition difunktioneller Monomerer oder cyclischer Lactame (wie beispielsweise von ε -Aminocapronsäure bzw. ε-Caprolactam) oder durch Umsetzung eines konjugierten Monomerenpaares, wie beispielsweise eines Diamins und einer Dicarbonsäure, hergestellt werden.

Bevorzugte Polyamide B können durch Polymerisation von Lactamen der Formel

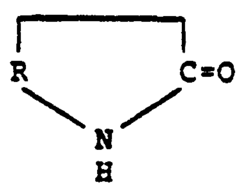

h ergestellt werden, worin R eine Alkylengruppe mit 3 bis 13 oder mehr Kohlenstoffatomen, vorzugsweise mit 5 bis 13 Kohlenstoffatomen, bedeutet. Bevorzugte Lactame sind ε-Caprolactam, Pyrrolidon, Piperidon, Valerolactam, Capryllactam und Lauryllactam. Auch sind Mischpolyamide aus zwei oder mehreren Lactamen eingeschlossen. Bevorzugte Polyamine, die zur Herstellung von Polyamiden B brauchbar sind, sind beispielsweise Propandiamin, Hexamethylendiamin und Octamethylendiamin. Bevorzugte Polycarbonsäuren sind beispielsweise Adipinsäure, Pimelinsäure, Suberinsäure, Sebacinsäure und Dodecansäure.

Bevorzugte Polyamide B umfassen Polyamid 6, Polyamid 6,6, deren Gemische, Blockpolyamide und Copolyamide aus δ-Caprolactam, Adipinsäure und Hexamethylendiamin, weiterhin Polyamid-11, Polyamid 12 und Polyamide, die aus aliphatischen Diaminen und Adipinsäure und/oder Isophthalsäure und/oder Terephthalsäure und/oder Sebacinsäure und/oder Azelainsäure und/oder Cyclohexandicarbonsäure aufgebaut sind.

Als aliphatische Diamine sind außer Hexamethylendiamin, 2,2,4- und 2,4,4-Trimethyl-hexamethylendiamin,

Isophorondiamin, 1,3- und 1,4-Bis-aminocyclohexan, Bisaminocyclohexyl-alkane und Xylylendiamine zu nennen.

Außerdem kommen Polyamide in Betracht, die aus den genannten aliphatischen Dicarbonsäuren und aromatischen Diaminen wie z.B. m- und p-Phenylendiamin hergestellt werden, sowie Polyamidgemische und Copolyamide aus allen genannten Komponenten, soweit aliphatische oder teilaliphatische Polyamide entstehen. Bevorzugte Polyamide sind aliphatische Polyamide, insbesondere Polyamid-6 und Polyamid-6,6.

Bevorzugte Polyamide B besitzen eine relative Viskosität von 2.0 bis 6.0, vorzugsweise 2.5 bis 4.5, gemessen an einer Lösung von 0,5 g Polyamid in 100 ml m-Kresol-Lösung bei 25° C.

Bevorzugte Polyoxymethylene B besitzen als Zahlenmittel bestimmte Molekulargewichte von 20 000 bis 100 000, vorzugsweise von 30 000 bis 50 000. Sie sind im Kunststoff-Handbuch, Band XI, Carl Hanser Verlag, München beschrieben.

Bevorzugte Polyethylene B und Polypropylene B können nach Hoch-, Mittel- und Niederdruckverfahren hergestellt werden und besitzen im allgemeinen als Zahlenmittel bestimmte Molekulargewichte von 20 000 bis 500 000, vorzugsweise von 50 000 bis 350 000. Sie sind im Band IV des Kunststoff-Handbuches beschrieben.

Die Einarbeitung der teilkristallinen Thermoplasten B in die mesomorphen Polykondensate A erfolgt vorzugsweise in Extrudern. Es sind jedoch auch Kneter, Walzen oder Rührgefäße geeignet.

Die erfindungsgemäßen Mischungen können übliche Verarbeitungshilfsmittel wie z.B. Fließ- und Entformungsmittel Füll- und Verstärkungsmittel, wie z.B. Talkum, Kreide, Glasfasern, Pigmente, wie z.B. Titandioxid, Ruß, Brandschutzmittel, wie z.B. Halogenverbindungen, Antimontrioxid und Stabilisatoren, wie z.B. niedermolekulare Phosphite, enthalten.

Die erfindungsgemäßen Mischungen lassen sich zu Formkörpern, Halbzeug und Folien verarbeiten.

## Beispiele

### Mesomorphes Polykondensat A 1

Gemäß Beispiel 1 der DE-OS 2 348 697 und 2 348 698 wurde ein Cokondensat aus 65 Mol-% p-Hydroxy-benzoesäure und 35 Mol-% Polyethylenterephthalat hergestellt. Die relative Viskosität, gemessen an einer Lösung von 0,5 g des Cokondensates in 100 ml Phenol/o-Dichlorbenzol (1:1 Gew.-Teile) bei 25° C, betrug 1,31.

Untersuchung des mesomorphen Zustandes der Schmelze:
Untersuchungstemperatur 330° C: 47 Skalenteile
360° C: 43 Skalenteile

### Mesomorphes Polykondensat A 2

Gemäß der japanischen Patentschrift 45 850 wurde nach dem Acetat-Umesterungsverfahren ein Cokondensat aus 43 Mol-% p-Hydroxy-benzoesäure und je 28,5 Mol-% Isophthalsäure und Hydrochinon hergestellt. Die relative Viskosität, gemessen wie bei Polykondensat A 1 angegeben, lag bei 1,283.

Untersuchung des mesomorphen Zustandes der Schmelze:
Untersuchungstemperatur 380° C: 51 Skalenteile
410° C: 45 Skalenteile

### Beispiele 1 bis 3

Die mesomorphen Polykondensate A 1 und A 2 wurden mit jeweils 20 Gew.-% verschiedener Thermoplasten mit einer Schmelzenthalpie von ≥ 10 J/g in einem Doppelwellenextruder gemischt. Die Zusammensetzungen der Mischungen und deren Eigenschaften zeigt die Tabelle.

**Tabelle**
Zusammensetzungen und Eigenschaften von Mischungen, enthaltend 80 Gew.—% mesomorphes Polykondensat

| Beispiel | 1 | 2 | 3 | Vergleich |
|---|---|---|---|---|
| Mesomorphes Polykondensat | $A^1$ | $A^1$ | $A^2$ | $A^2$ |
| teilkrist. Thermoplast B | Polyamid[1] $\eta$ rel = 3,1 | POM* | Polyamid[2] $\eta$ rel = 3,94 | |
| Schlagzähigkeit bei 23°C [kJ/$m^2$] | 88,6 | 73,5 | 38,7 | 23,8 |
| Kerbschlagzähigkeit bei 23°C [kJ/$m^2$] | 25,8 | 23,8 | 15,8 | 12,6 |
| Zug-E-Modul [MPa] | 12 300 | 12 400 | 10 300 | 11 800 |
| Reißfestigkeit [MPa] | 136,4 | 132,6 | 131 | 123 |
| Reißdehnung [%] | 2,2 | 2 | 2 | 2 |
| linearer thermischer Ausdehnungskoeffizient [$K^{-1}$] | $3{,}2 \cdot 10^{-6}$ | $4{,}1 \cdot 10^{-6}$ | $4{,}7 \cdot 10^{-6}$ | $4{,}1 \cdot 10^{-6}$ |
| Kugeldruckhärte H 30 [N/$mm^2$] | 92 | 97 | 95 | 66,4 |

[1,2] Polyamid-6, $\eta$ rel gemessen an einer Lösung von 1 g Polyamid in 100 ml m-Kresol-Lösung bei 25°C, Werte für den spritzfrischen Zustand.

* POM = Polyoxymethylen

**Patentansprüche**

1. Mischungen aus
a. 60-99,5 Gew.-% mindestens eines mesomorphen Polykondensats A und
b. 0,5-40 Gew.-% mindestens eines teilkristallinen Thermoplasten B mit einer Schmelzenthalpie von ≧ 10 J/g mit der Maßgabe, daß A mit B (im Festkörper) ein zweiphasiges System bildet, wobei der teilkristalline Thermoplast B aus der Reihe voll-aromatischer Polyester, Polyamide, Polyoxymethylen, Polyethylen und Polypropylen ausgewählt ist.
2. Mischungen nach Anspruch 1, dadurch gekennzeichnet, daß die aus
70-95 Gew.-% Polykondensat A und
5-30 Gew.-% Thermoplast B bestehen.
3. Verfahren zur Herstellung der Mischungen nach Ansprüchen 1 und 2 durch Homogenisieren der Komponenten in der Schmelze.
4. Verwendung der Mischungen nach Ansprüchen 1 und 2 zur Herstellung von Formkörpern, insbesondere durch Spritzguß oder Extrusion.

**Claims**

1. Mixtures of
a. 60-99.5% by weight of at least one mesomorphous polycondensate A and
b. 0.5-40% by weight of at least one partially crystalline thermoplast B having a melting enthalpy of ≧ 10 J/g, with the proviso that A forms a two phase system with B (in the solid), the partially crystalline thermoplast B being selected from the series comprising fully aromatic polyesters, polyamides, polyoxymethylene, polyethylene and polypropylene.
2. Mixtures according to Claim 1, characterised in that they consist of
70-95% by weight of polycondensate A and
9-30% by weight of thermoplast B.
3. Process for the production of the mixtures according to Claims 1 and 2 by homogenising the components in the melt.
4. Use of the mixtures according to Claims 1 and 2 for producing mouldings, in particular by injection moulding or extrusion.

**Revendication**

1. Mélanges de
a. 60 à 99,5 % en poids d'au moins un polycondensat mésomorphe A et de
b. 0,5 à 40 % en poids d'au moins une matière thermoplastique B partiellement cristalline ayant une anthalpie de fusion égale ou supérieure à 10 J/g dans la mesure où A forme avec B (dans le corps solide) un système de deux phases, la matière thermoplastique B partiellement cristalline étant choisie dans la série comprenant des polyesters entièrement aromatiques, des polyamides, un polyoxyméthylène, un polyéthylène et un polypropylène.

2. Mélanges suivant la revendication
caractérisés en ce qu'ils sont formés de
70 à 95 % en poids de polycondensat A et de
5 à 30 % en poids de matière thermoplastique B.

3. Procédé de production des mélanges suivent les revendications 1 et 2 par homogénéisation des composants à l'état fondu.

4. Utilisation des mélanges suivant les revendications 1 et 2 pour la fabrication de pièces moulées, notamment par moulage par injection ou par extrusion.